# EUROPÄISCHE PATENTSCHRIFT

(11) **EP 1 505 464 B1**
(45) Veröffentlichungstag und Bekanntmachung des Hinweises auf die Patenterteilung: **10.12.2008**
(21) Anmeldenummer: 04014562.5
(22) Anmeldetag: 22.06.2004
(51) Int. Cl.: G05B 19/401

(54) **Verfahren zur Genauigkeitsüberprüfung einer Hochpräzisions-Werkzeugmaschine**
Method for testing the accuracy of a high-precision machine tool
Procédé de contrôle de la précision d'une machine-outil de haute précision

(30) Priorität: 07.08.2003 DE 10336213
(43) Veröffentlichungstag der Anmeldung: 09.02.2005
(73) Patentinhaber: Alschweig, Ekkehard, 82418 Murnau (DE)
(72) Erfinder: Alschweig, Ekkehard, 82418 Murnau (DE)
(74) Vertreter: Flosdorff, Jürgen

(56) Entgegenhaltungen:
- EP-A- 1 316 777
- DE-A1- 19 858 154
- DE-A1- 19 924 511

## Beschreibung

Die Erfindung betrifft ein Verfahren zur Genauigkeitsüberprüfung einer Hochpräzisions-Werkzeugmaschine gemäß dem Oberbegriff des Patentanspruchs 1.

Dabei handelt es sich um ein Verfahren, mit dem sich eine Hochpräzisions-Werkzeugmaschine hinsichtlich der aktuellen Genauigkeit in den drei Achsen X, Y und Z bzw. in den fünf Achsen X, Y, Z, B, C selbst überprüfen kann.

Hochpräzisions-Werkzeugmaschinen sollen im Bereich von 1 µm oder darunter mit Genauigkeit arbeiten. In diesem Größenbereich verfälschen aber Einflüsse aus Temperatur, Verschleiß, Einstellung der Achsen, Belastung etc. sehr leicht die erwartete Präzision der Maschine. Da diese Präzision in der Größenordnung von Micrometern bisher nur mit aufwändiger Meßtechnik erfaßbar ist, werden Präzisionsabweichungen vom Bediener der Werkzeugmaschine oft gar nicht erkannt oder aber erst zu einem Zeitpunkt, zu dem das Bauteil gefertigt ist und eine außerhalb der Werkzeugmaschine stattgefundene Vermessung nicht akzeptable Abweichungen zeigt. Durch diesen Umstand entstehen hohe verlorene Bearbeitungskosten und Zeitverluste (Lieferzeit).

Aus diesem Grund werden Werkzeugmaschinen der betrachteten Art nicht nur bei der Neuerstellung, sondern üblicherweise auch nach einer bestimmten Einsatzzeit im Rahmen einer Überholung hinsichtlich ihrer Genauigkeit überprüft. Dazu werden meßtechnische Verfahren zur Überprüfung der Achsen eingesetzt. Die generellen Fragen dabei lauten:
1. Fährt die Achse in Längsrichtung genau den Abstand, der vorgegeben wurde, d.h. sind der Sollwert und der Istwert identisch?
2. Stehen alle Achsen senkrecht aufeinander?

Zur Ermittlung dieser Werte werden Meßgeräte, wie das Koordinatenkreuzgitter-Meßgerät (KGM) von Heidenhain eingesetzt, das jeweils zwei Achsen gemeinsam erfasst und die Werte für die Längsausdehnung der Achsen und den Winkel von zwei Achsen zueinander aufzeichnet und auswertet. Dazu muß das flächig gestaltete KGM jeweils in den Ebenen X/Y, X/Z und Y/Z aufgebaut und jeweils die Messungen durchgeführt werden. Der Zeitaufwand für eine solche Messung beträgt in der Regel 4 bis 6 Stunden. Bei dieser herkömmlichen Methode zur Ermittlung der Genauigkeit einer Werkzeugmaschine wird der Produktionsprozeß über mehrere Stunden unterbrochen, und die Maschine bzw. die Bedienungsperson warten so lange, bis die Prüfung positiv abgeschlossen ist.

Die DE 199 245 11 A1 offenbart ein Vermessungsverfahren für eine Handhabungsvorrichtung, bei dem ein optisches Messsystem vorgesehen ist, das beim Hersteller kalibriert wird. Das Verfahren sieht vor, dass mindestens ein Messkörper, vorzugsweise mehrere Messkörper, in dem Bearbeitungsraum der Werkzeugmaschine verfahren werden, und jeweils Messwerte der Positionen der Messkörper von dem Messsystem aufgenommen werden.

Der vorliegenden Erfindung liegt die Aufgabe zugrunde, ein Verfahren anzugeben, mit dem jederzeit die Genauigkeitsüberprüfung in kurzer Zeit und ohne lange Unterbrechung des Fertigungsprozesses durchzuführen und eine Aussage über die aktuelle Maschinengenauigkeit der Werkzeugmaschine zu erhalten ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Bei dem erfindungsgemäßen Verfahren wird der in der Werkzeugmaschine vorhandene elektronischer Messtaster verwendet.

Der Messtaster wird in einem ersten Schritt kalibriert, wozu bevorzugt ein Messring oder eine Messkugel bekannter Größe angetastet und eine Selbstkalibrierung vorgenommen wird.

Der kalibrierte Messtaster vermisst erfindungsgemäß ein Kalibrierwerkstück bekannter Dimensionen in X-Y- und Z-Richtung, wobei das Kalibrierwerkstück, das zu dieser Überprüfung verwendet wird, bevorzugt Bohrungen, Stufen oder ähnliche Konturen in X-, Y- und Z-Richtung mit bekannten Abmessungen hat. Diese Abmessungen sind bevorzugt auf einer externen Meßmaschine im Vorfeld ermittelt worden.

Nachdem das Kalibrierwerkstück in vorbestimmter Position auf dem Werkzeugmaschinentisch aufgespannt ist, tastet der Messtaster das Kalibrierwerkstück mit Hilfe eines Meßprogramms an, wobei die Einzelkoordinaten der Meßpunkte ermittelt und die Meßwerte bevorzugt in einer Tabelle in der Maschinensteuerung abgelegt werden.

Es folgt ein Vergleich der aktuellen Meßwerte mit den Soll-Meßwerten und eine Auswertung der Abweichungen.

Der abschließende Schritt des erfindungsgemäßen Verfahrens besteht in einer Bewertung der Abweichungen in Form von Gut- und Schlechtbewertungen in einer grafischen Darstellung oder in Tabellenform.

Der komplette Zyklus des Vermessens des Kalibrierwerkstückes einschließlich der Kalibrierung des Meßtasters nimmt je nach Komplexität des Kalibrierwerkstückes fünf bis fünfzehn Minuten in Anspruch. Das Ergebnis in Form einer Gut- und Schlechtbewertung wird bevorzugt auf der Maschinensteuerungsanzeige sofort angezeigt und erlaubt dem Bediener der Maschine die Entscheidung, ob die Maschinengenauigkeit ausreichend ist oder nicht.

Bei dem an sich bekannten Kalibrieren eines Meßtasters werden Kalibrierteile eingesetzt, die im Verhältnis zu den Verfahrwegen der X-, Y-, Z-Achsen der Werkzeugmaschine klein sind, üblicherweise 3 bis 10 % der Verfahrwege betragen. Beim Kalibrieren des Meßtasters werden diese Kalibrierteile in Form von Ringen oder Kugeln mit bekannten Maßen von dem Meßtaster abgetastet, wobei das Meßergebnis in der Meßtaster-Software zur Beseitigung von Fehlern des Meßtasters (wie z.B. Schaltpunkt, Tastkugeldurchmesser etc.) verwendet wird. Die Maschinengenauigkeit wird durch diesen Kalibriervorgang nicht tangiert.

Gegenüber dem zum Kalibrieren des Meßtasters vorgesehenen Kalibrierteil ist das Kalibrier-Werkstück, das zur Genauigkeitsüberprüfung der Werkzeugmaschine abgetastet wird, groß und repräsentiert die Achsverfahrwege, d.h. es erstreckt sich bevorzugt im wesentlichen über die gesamte Länge der Achsverfahrwege, wenigstens aber über etwa ein Drittel der Verfahrwege.

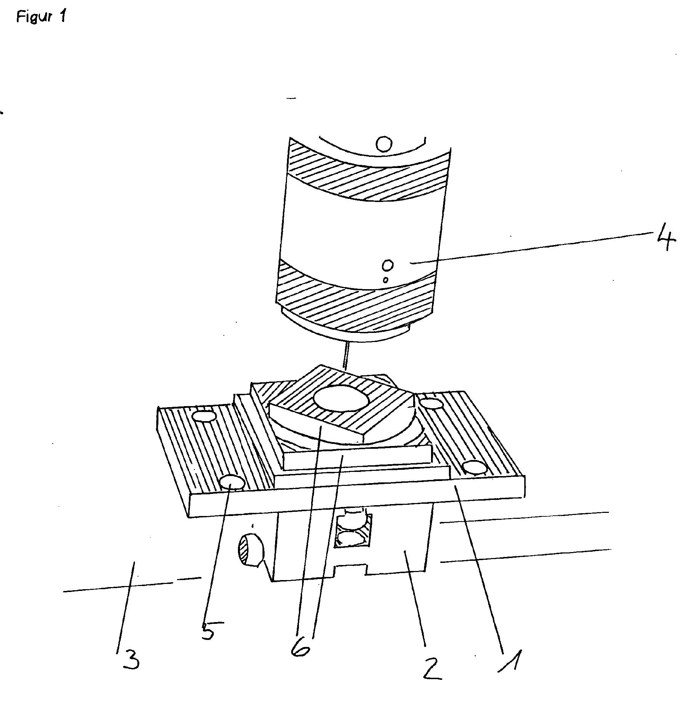

Die beigefügte Figur zeigt in einer perspektivischen Ansicht ein Kalibrierwerkstück 1 mit Aufspannsystem 2 auf einem Werkzeugmaschinentisch 3 mit einem Meßtaster 4. Das Kalibrierwerkstück 1 enthält Bohrungen 5 und Stufen 6 mit bekannten Abmessungen.

## Patentansprüche

1. Verfahren, das zur Genauigkeitsüberprüfung einer Hochpräzisions-Werkzeugmaschine geeignet ist,
**gekennzeichnet durch** folgende Schritte:
a) ein in der Werkzeugmaschine befindlicher elektronischer Messtester (4) wird mit Hilfe von Kalibrierteilen kalibriert, die in Verhältnis zu den Verfahrwegen der X-, Y-, Z-Achsen der Werkzeugmaschine klein sind,
b) ein Kalibrierwerkstück (1)mit Konturen mit bekannten Abmessungen in X-,Y- und Z-Richtung wird in vorbestimmter Position auf dem Werkzeugmaschinentisch aufgespannt, wobei das Kalibrierwerkstück sich wenigstens über ein Drittel der Achsverfahrwege erstreckt,
c) der Messtester (4) tastet das Kalibrierwerkstück (1) mit Hilfe eines Messprogramms an, wobei die aktuellen Koordinaten der Konturen ermittelt werden,
d) die aktuellen Meßwerte werden mit den bekannten Meßwerten verglichen und
e) die Abweichungen der Meßwerte werden zur Bewertung der Genauigkeit der Werkzeugmaschine ausgewertet.

2. Verfahren nach Anspruch 1,
**dadurch gekennzeichnet,**
**daß** das Kalibrierwerkstück (1) durch seine Größe die Werkzeugmaschinen-Verfahrwege repräsentiert.

3. Verfahren nach einem der Ansprüche 1 oder 2
**dadurch gekennzeichnet,**
**daß** bei Schritt c) die aktuellen Messwerte in einer Tabelle in der Maschinensteuerung abgelegt werden.

4. Verfahren nach Anspruch 1,
**dadurch gekennzeichnet,**
**daß** das Ergebnis der Auswertung in Form von Gut- und Schlechtbewertungen in einer Tabelle oder grafisch ausgewertet und auf der Maschinensteuerungsanzeige angezeigt wird.

## Claims

1. A method which is suitable for testing the accuracy of a high-precision machine tool, **characterised by** the following steps:
a) an electronic measurement gauge (4) situated in the machine tool is calibrated with the aid of calibrating members, which are small in relation to the paths of movement of the X-,Y- and Z-axes of the machine tool,
b) a calibrating workpiece (1) with contours with known dimensions in the X-,Y- and Z-directions is clamped in a predetermined position on the machine tool table, wherein the calibrating workpiece extends over at least of a third of the axial movement paths,
c) the measurement gauge (4) senses the calibration workpiece (1) with the aid of a measuring program, whereby the actual coordinates of the contours are determined,
d) the actual measurement values are compared with the known measurement values and
e) the deviations in the measurement values are analysed to evaluate the precision of the machine tool.

2. A method as claimed in Claim 1, **characterised in that** the calibration workpiece (1) represents the machine tool movement paths by its size.

3. A method as claimed in one of Claims 1 or 2, **characterised in that** in step c) the actual measurement values are inserted into a table in the machine controller.

4. A method as claimed in Claim 1, **characterised in that** the result of the analysis is indicated in a table in the form of good and poor evaluations or is graphically analysed and indicated on the machine controller display. -

## Revendications

1. Procédé qui convient pour le contrôle de la précision d'une machine-outil de haute précision, **caractérisé par** les étapes suivantes :
a) un testeur de mesure électronique (4) se trouvant dans la machine-outil est calibré à l'aide de parties de calibrage qui, en rapport avec les chemins de déplacement des axes X, Y, Z de la machine-outil, sont petites,
b) une pièce de calibrage (1) avec des contours avec des dimensions connues dans la direction X, Y et Z est serrée dans une position prédéterminée sur le plateau de la machine-outil, où la pièce de calibrage s'étend au moins sur un tiers des chemins de déplacement d'axe,
c) le testeur de mesure (4) explore la pièce de calibrage (1) à l'aide d'un programme de mesure, où les coordonnées actuelles des contours sont déterminées,
d) les valeurs de mesure actuelles sont comparées avec les valeurs de mesure connues et
e) les écarts des valeurs de mesure sont évalués pour l'évaluation de la précision de la machine-outil.

2. Procédé selon la revendication 1, **caractérisé en ce que** la pièce de calibrage (1), par sa grandeur, représente les chemins de déplacement de la machine-outil.

3. Procédé selon l'une des revendications 1 ou 2, **caractérisé en ce que** dans l'étape (c), les valeurs de mesure actuelles sont stockées dans un tableau dans la commande de la machine.

4. Procédé selon la revendication 1, **caractérisé en ce que** le résultat de l'évaluation est évalué sous la forme d'évaluations positives et négatives dans un tableau ou bien d'une manière graphique et est affiché sur l'affichage de la commande de la machine.
